# EUROPEAN PATENT APPLICATION

(11) **EP 4 825 611 A1**
(43) Date of publication of application: **21.10.2026**
(21) Application number: 24903189.9
(22) Date of filing: 18.06.2024
(51) Int. Cl.: B60C 19/00, B60C 17/00

(54) **TIRE**

(30) Priority: 11.12.2023 JP 2023208734
(71) Applicant: BRIDGESTONE CORPORATION, Chuo-ku Tokyo 104-8340 (JP)
(72) Inventor: KAMADA, Takehito, Tokyo 104-8340 (JP); HOSHINO, Hironori, Tokyo 104-8340 (JP)
(74) Representative: Marks & Clerk LLP
(86) International application number: PCT/JP2024/022110
(87) International publication number: WO 2025/126525

(57) **Abstract**

A tire including: side-reinforcing rubber having a crescent-shaped cross section, which is disposed in a sidewall portion 1b of the tire; and a communication device 10 embedded inside the tire. The side-reinforcing rubber has a side-reinforcing rubber joint portion at which tire circumferential end portions of the side-reinforcing rubber are joined to each other. The entirety of the communication device is located within a defined tire circumferential region Kr that extends over a tire angle range of 90°, centered at a defined tire circumferential position Kb separated by 180° from a tire circumferential center of the side-reinforcing rubber joint portion.

## Description

### TECHNICAL FIELD

The present disclosure relates to a tire.

This application claims priority based on Japanese Patent Application No. 2023-208734 filed in Japan on December 11, 2023, the entire contents of which are incorporated herein by reference.

### BACKGROUND

Conventionally, there are tires in which side-reinforcing rubber is provided in a sidewall portion (Patent Literature (PTL) 1).

### CITATION LIST

### Patent Literature

PTL 1: JP 2013-71468 A

### SUMMARY

### (Technical Problem)

The inventors of the present disclosure have newly discovered, in conventional tires as described above, a configuration capable of suppressing damage to a communication device (for example, an RF tag or the like) embedded inside the tire due to heat buildup inside the tire during rolling, and have thus arrived at the present disclosure.

The present disclosure aims to provide a tire capable of suppressing damage to a communication device due to heat buildup inside the tire during rolling.

### (Solution to Problem)

[1] A tire comprising:
   side-reinforcing rubber having a crescent-shaped cross section, which is disposed in a sidewall portion of the tire; and
   a communication device embedded inside the tire,
   wherein the side-reinforcing rubber has a side-reinforcing rubber joint portion at which tire circumferential end portions of the side-reinforcing rubber are joined to each other, and
   wherein the entirety of the communication device is located within a defined tire circumferential region that extends over a tire angle range of 90°, centered at a defined tire circumferential position separated by 180° from a tire circumferential center of the side-reinforcing rubber joint portion.

### (Advantageous Effect)

According to the present disclosure, it is possible to provide a tire capable of suppressing damage to a communication device due to heat buildup inside the tire during rolling.

### BRIEF DESCRIPTION OF THE DRAWINGS

In the accompanying drawings:
FIG. 1 is a side view schematically illustrating a tire according to one embodiment of the present disclosure as viewed from one side in the tire width direction, and also a projection view schematically illustrating the state when the tire is projected in the tire width direction;
FIG. 2 is an A-A sectional view schematically illustrating a half portion of the tire of FIG. 1 in a cross section along the A-A line of FIG. 1;
FIG. 3 is a B-B sectional view schematically illustrating a part of the side-reinforcing rubber of FIG. 1 in a cross section along the B-B line of FIG. 1;
FIG. 4 is a perspective view schematically illustrating an example of a communication device that can be used in a tire according to an optional embodiment of the present disclosure; and
FIG. 5 is an exploded perspective view schematically illustrating the communication device of FIG. 4 in an exploded state.

The tire according to the present disclosure can be suitably used for any type of pneumatic tire, and, for example, can be suitably used for a passenger vehicle pneumatic tire.

Hereinafter, embodiments of the tire according to the present disclosure will be illustratively described with reference to the drawings.

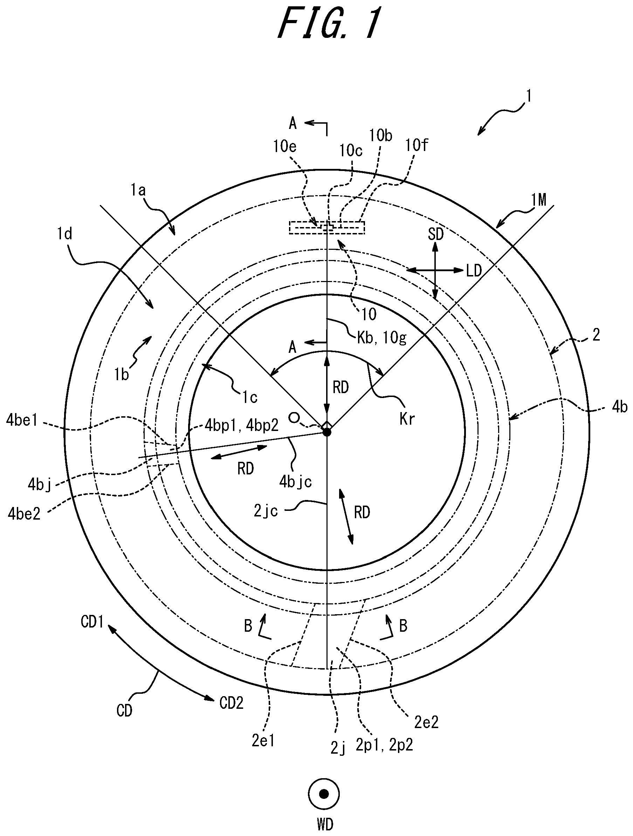

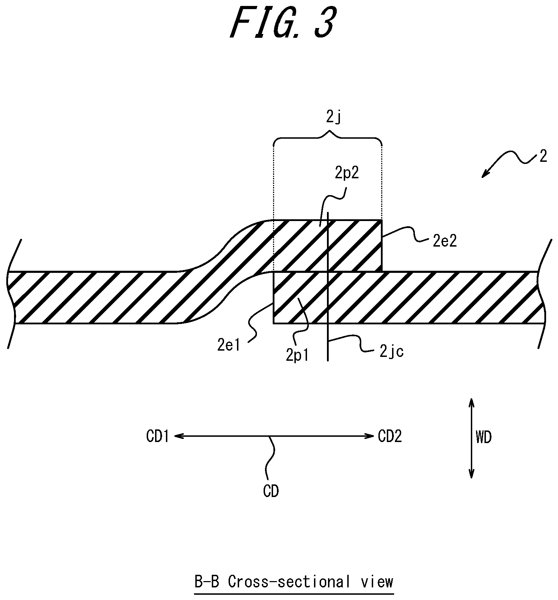

In each drawing, the same reference numerals are assigned to common members and portions. In some drawings, the tire width direction is indicated by the symbol "WD," the tire radial direction by the symbol "RD," and the tire circumferential direction by the symbol "CD." In this specification, one side in the tire circumferential direction (CD) is referred to as the "first side in the tire circumferential direction (CD1)" (FIG. 1, FIG. 3), and the other side in the tire circumferential direction (CD) is referred to as the "second side in the tire circumferential direction (CD2)" (FIG. 1, FIG. 3). Further, in this specification, the "tire angle range" refers to an angular range with the central axis (rotational axis) (O) of the tire as the center of rotation.

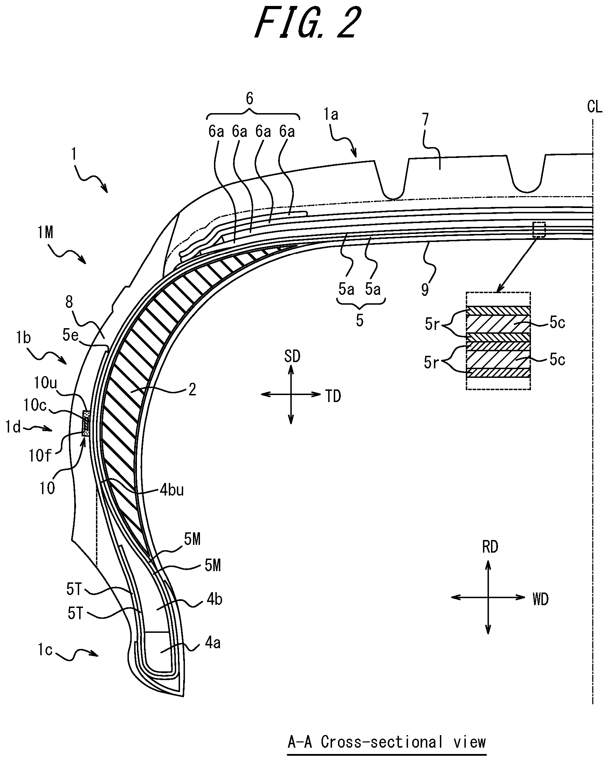

FIGS. 1 to 3 are drawings for explaining a tire 1 according to one embodiment of the present disclosure. FIG. 1 is a side view schematically illustrating the tire 1 according to one embodiment of the present disclosure as viewed from one side in the tire width direction, and is also a projection view schematically illustrating the state when the tire 1 is projected in the tire width direction. FIG. 2 is an A-A sectional view illustrating a half portion of the tire 1 (a portion on either side with respect to the tire equatorial plane CL) of FIG. 1, by a section along line A-A in FIG. 1. FIG. 3 is a B-B sectional view illustrating a part of the side-reinforcing rubber 2 of FIG. 1, by a section along line B-B in FIG. 1. The B-B line in FIG. 1 extends along the tire circumferential direction.

The tire 1 of the embodiment in FIG. 1 is configured as a passenger vehicle pneumatic tire.

However, the tire 1 of any embodiment of the present disclosure may be configured as any type of tire.

The tire 1 includes a tire main body 1M and a communication device 10. The tire main body 1M corresponds to the portion of the tire 1 other than the communication device 10.

Hereinafter, unless otherwise specified, the positional relationships, dimensions, and the like of each element are to be measured in a reference state in which the tire 1 is mounted on an applicable rim, inflated to a prescribed internal pressure, and is unloaded. Further, when the tire 1 is mounted on an applicable rim, inflated to the prescribed internal pressure, and loaded with the maximum load, the width in the tire width direction of the contact patch with the road surface is referred to as the ground contact width of the tire, and the end in the tire width direction of the contact patch is referred to as the ground contact end.

In this specification, the "applicable rim" refers to the approved rim (referred to as "Measuring Rim" in the ETRTO STANDARDS MANUAL and as "Design Rim" in the TRA YEAR BOOK) for the applicable size described or to be described in the future in the industrial standards effective in the region where the pneumatic tire is produced and used, such as the JATMA YEAR BOOK of the Japan Automobile Tyre Manufacturers Association in Japan, the STANDARDS MANUAL of the European Tyre and Rim Technical Organisation (ETRTO) in Europe, and the YEAR BOOK of The Tire and Rim Association, Inc. (TRA) in the United States. For sizes not described in these industrial standards, it refers to a rim having a width corresponding to the bead width of the pneumatic tire. The "applicable rim" includes, in addition to current sizes, sizes to be described in the aforementioned industrial standards in the future. As an example of "sizes to be described in the future," sizes described as "FUTURE DEVELOPMENTS" in the 2013 edition of the ETRTO may be cited.

In this specification, the "prescribed internal pressure" refers to the air pressure (maximum air pressure) corresponding to the maximum load capability of a single tire for the applicable size and ply rating described in the aforementioned industrial standards such as the JATMA YEAR BOOK, and for sizes not described in the aforementioned industrial standards, refers to the air pressure (maximum air pressure) corresponding to the maximum load capability specified for each vehicle on which the tire is mounted. Further, in this specification, the "maximum load" means the load corresponding to the maximum load capability of the tire for the applicable size described in the aforementioned industrial standards, or, for sizes not described in the aforementioned industrial standards, the load corresponding to the maximum load capability specified for each vehicle on which the tire is mounted.

First, the tire main body 1M will be described.

As illustrated in FIGS. 1 and 2, the tire main body 1M includes a tread portion 1a, a pair of sidewall portions 1b extending radially inward from both ends in the tire width direction of the tread portion 1a, and a pair of bead portions 1c provided at the radially inner ends of the respective sidewall portions 1b. The tread portion 1a is the portion in the tire width direction between the pair of ground contact ends in the tire main body 1M. The bead portion 1c is configured to contact the rim at the radially inner side and the outer side in the tire width direction when the tire 1 is mounted on the rim.

The tire main body 1M has a pair of tire side portions 1d extending radially inward from both ends in the tire width direction of the tread portion 1a. The tire side portion 1d is composed of the sidewall portion 1b and the bead portion 1c.

Further, the tire main body 1M includes a pair of bead cores 4a, a pair of bead fillers 4b, a carcass 5, a belt 6, tread rubber 7, side rubber 8, an inner liner 9, and a pair of side-reinforcing rubber 2.

Each bead core 4a is embedded in the corresponding bead portion 1c. The bead core 4a includes a plurality of bead wires covered with rubber. The bead wire is preferably made of metal (for example, steel). The bead wire may be formed of, for example, a monofilament or a stranded wire. Note that the bead wire may also be made of organic fiber or carbon fiber.

Each bead filler 4b is located radially outward of the corresponding bead core 4a. The bead filler 4b extends in a tapered shape toward the radially outer side. The bead filler 4b is, for example, made of rubber.

The carcass 5 extends between the pair of bead cores 4a and is toroidally extended. The carcass 5 is composed of one or more (in the embodiment of FIG. 2, two) carcass plies 5a. Each carcass ply 5a includes one or more carcass cords 5c and coating rubber 5r covering the carcass cords 5c (FIG. 2). The carcass cords 5c may be formed of monofilament or stranded wire.

The carcass cords 5c are preferably made of organic fibers such as polyester, nylon, rayon, or aramid.

The carcass ply 5a includes a ply main body 5M located between the pair of bead cores 4a. The carcass ply 5a may further include a ply turn-up portion 5T that is turned up from both ends of the ply main body 5M around the bead core 4a from the inner side to the outer side in the tire width direction. However, the carcass ply 5a may not include the ply turn-up portion 5T.

The ply main body 5M is located on the inner side in the tire width direction relative to the bead filler 4b and the bead core 4a. The ply turn-up portion 5T is located on the outer side in the tire width direction relative to the bead filler 4b and the bead core 4a.

The carcass 5 is preferably of a radial structure, but may also be of a bias structure.

The belt 6 is disposed radially outward of the crown portion of the carcass 5. The belt 6 includes one or more belt layers 6a. Each belt layer 6a includes one or more belt cords and coating rubber covering the belt cords. The belt cords may be formed of monofilament or stranded wire. The belt cords may be made of metal (for example, steel), or may be made of organic fibers such as polyester, nylon, rayon, or aramid.

The tread rubber 7 is located radially outward of the belt 6 in the tread portion 1a. The tread rubber 7 forms the tread surface, which is the radially outer surface of the tread portion 1a. A tread pattern is formed on the tread surface.

The side rubber 8 is located in the sidewall portion 1b. The side rubber 8 forms the outer surface on the outer side in the tire width direction of the sidewall portion 1b. The side rubber 8 is located on the outer side in the tire width direction relative to the carcass 5. The side rubber 8 is located on the outer side in the tire width direction relative to the bead filler 4b. The side rubber 8 is integrally formed with the tread rubber 7.

The inner liner 9 is disposed on the inner side of the carcass 5 and may, for example, be laminated on the inner side of the carcass 5. The inner liner 9 is, for example, made of butyl-based rubber having low air permeability. The butyl-based rubber includes, for example, butyl rubber and halogenated butyl rubber, which is a derivative thereof. The inner liner 9 is not limited to butyl-based rubber and may be made of other rubber compositions, resin, or elastomer.

The side-reinforcing rubber 2 is disposed in the sidewall portion 1b. Each side-reinforcing rubber 2 is embedded in the corresponding sidewall portion 1b. Each side-reinforcing rubber 2 is disposed on the inner side in the tire width direction relative to the carcass 5. Further, each side-reinforcing rubber 2 is disposed on the outer side in the tire width direction relative to the inner liner 9. The side-reinforcing rubber 2, in a cross section in the tire width direction, has a crescent-shaped cross section that is convexly curved toward the outer side in the tire width direction, with the thickness gradually decreasing toward both the radially inner and outer sides. In this way, the tire 1 is configured as a run flat tire.

The side-reinforcing rubber 2 reinforces the tire side portion 1d and, in a state where the internal pressure of the tire 1 is low due to a puncture or the like, contributes to supporting the vehicle weight and suppresses vertical deflection of the tire 1, thereby enabling running over a certain distance.

Next, the communication device 10 will be described.

The communication device 10 may be configured to be capable of wireless communication with a predetermined external device (for example, a reader or a reader/writer) outside the tire 1, and the configuration of the communication device 10 is not particularly limited.

The communication device 10 preferably includes an RF tag. The RF tag is also referred to as an "RFID tag." The RF tag is preferably configured as a passive type, but may also be configured as an active type.

The communication device 10 may have, instead of or in addition to the RF tag, an accelerometer for detecting the acceleration of the tire 1, an internal pressure sensor for detecting the internal pressure of the tire 1, or the like.

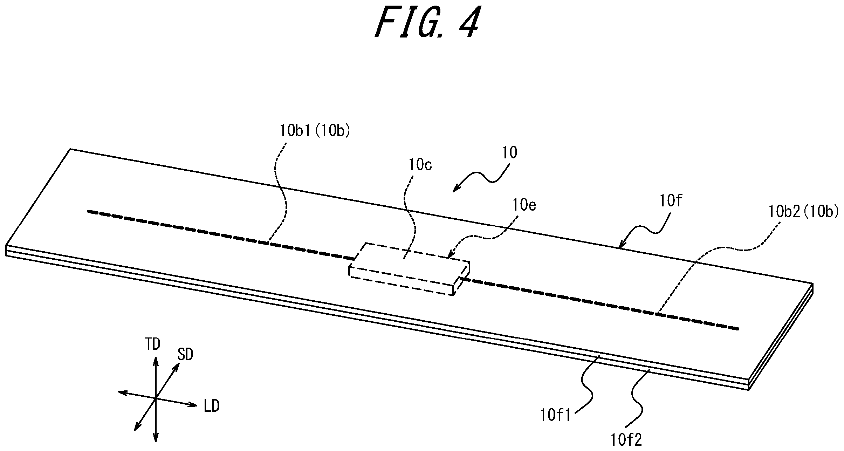

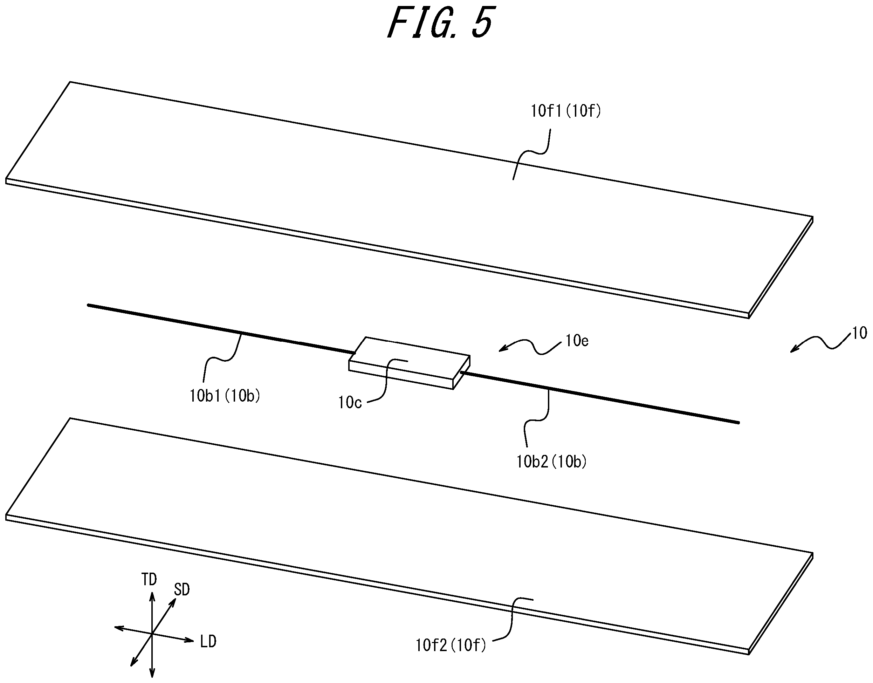

FIGS. 4 and 5 illustrate an example of the communication device 10. In this example, the communication device 10 includes an RF tag. In this example, the communication device 10 includes an RF tag 10e and a covering portion 10f. The RF tag 10e includes an IC chip 10c and an antenna portion 10b. The RF tag 10e is configured as a passive type.

The IC chip 10c operates, for example, by the electromotive force induced by radio waves received by the antenna portion 10b. The IC chip 10c includes, for example, a controller and a memory.

The memory may store arbitrary information. For example, the memory may store identification information of the tire 1. The identification information of the tire 1 is unique identification information for each tire 1, such as the manufacturer, manufacturing plant, manufacturing date, and the like, which can identify each tire individually. The memory may also store tire history information such as running distance, number of sudden braking events, number of sudden starts, number of sudden cornering situations, and the like. Further, for example, sensors for detecting the internal temperature of the tire, the internal pressure of the tire, the acceleration of the tire, and the like may be provided in the tire cavity, and the memory may store detection information detected by these sensors. In this case, the RF tag 10e can acquire detection information from the sensors by wirelessly communicating with the sensors via the antenna portion 10b.

The controller is configured to be capable of reading information from the memory.

The antenna portion 10b includes a pair of antennas 10b1 and 10b2. The pair of antennas 10b1 and 10b2 are respectively connected to end portions located on opposite sides of the IC chip 10c. The antenna portion 10b is configured to be capable of transmitting and receiving signals with the predetermined external device outside the tire 1. In the examples of FIGS. 4 and 5, each antenna 10b1 and 10b2 extends linearly, but each antenna 10b1 and 10b2 may extend in any shape, such as a wave shape.

The covering portion 10f covers the entirety of the RF tag 10e. The covering portion 10f is formed of, for example, rubber or resin.

In this example, the covering portion 10f includes a pair of sheet-like covering members 10f1 and 10f2. The pair of covering members 10f1 and 10f2 are stacked with the RF tag 10e sandwiched therebetween. The pair of covering members 10f1 and 10f2 are preferably fixed to each other by adhesion or the like.

However, the covering portion 10f may be formed of a single member.

In this example, the covering portion 10f has a rectangular shape in a planar view, but the covering portion 10f may have any shape in a planar view.

Note that the communication device 10 may not have the covering portion 10f, that is, may be composed only of the RF tag 10e.

The communication device 10 configured as described above is configured to be capable of receiving, via the antenna portion 10b, information transmitted from the predetermined external device by means of radio waves or a magnetic field. By rectification (in the case of radio waves) or resonance (in the case of a magnetic field), power is generated in the antenna portion 10b of the communication device 10, and the memory and controller of the IC chip 10c perform predetermined operations. For example, the controller reads out information from the memory and replies (transmits) it from the antenna portion 10b to the predetermined external device by means of radio waves or a magnetic field. The predetermined external device receives radio waves or a magnetic field from the communication device 10. By extracting the received information, the predetermined external device can acquire information stored in the memory of the IC chip 10c of the communication device 10.

However, the communication device 10 may have any configuration different from this example.

The communication device 10 may have a longitudinal direction LD, a short direction SD, and a thickness direction TD. The longitudinal direction LD, the short direction SD, and the thickness direction TD are mutually perpendicular.

As illustrated in FIGS. 4 and 5, when the communication device 10 includes the RF tag 10e, the longitudinal direction LD of the communication device 10 is parallel to the extending direction of the antenna portion 10b. When each antenna 10b1 and 10b2 of the antenna portion 10b is wave-shaped, the extending direction of the antenna portion 10b refers to the extending direction of the amplitude centerline of the wave shape formed by each antenna 10b1 and 10b2. In the communication device 10, the thickness direction TD of the communication device 10, when the communication device 10 has the covering portion 10f, refers to the thickness direction of the covering portion 10f, and when the communication device 10 does not have the covering portion 10f, refers to the thickness direction of the IC chip 10c.

The length of the RF tag 10e in the longitudinal direction LD is preferably, for example, 20 mm or more, or 50 mm or more. Further, the length of the RF tag 10e in the longitudinal direction LD is preferably, for example, 100 mm or less, or 70 mm or less.

The length of the RF tag 10e in the short direction SD is preferably, for example, 10 mm or less, or 8 mm or less.

The length of the RF tag 10e in the thickness direction TD is preferably, for example, 5 mm or less, or 2 mm or less.

When the communication device 10 has the covering portion 10f, the length of the communication device 10 in the longitudinal direction LD is preferably, for example, 30 mm or more, or 60 mm or more. Further, the length of the RF tag 10e in the longitudinal direction LD is preferably, for example, 110 mm or less, or 80 mm or less.

When the communication device 10 has the covering portion 10f, the length of the communication device 10 in the short direction SD is preferably, for example, 20 mm or less, or 15 mm or less.

When the communication device 10 has the covering portion 10f, the length of the communication device 10 in the thickness direction TD is preferably, for example, 6 mm or less, or 3 mm or less.

The thickness of each of the covering members 10f1 and 10f2 of the covering portion 10f is preferably, for example, 0.5 mm or more. Further, the thickness of each of the covering members 10f1 and 10f2 of the covering portion 10f is preferably, for example, 1 mm or less.

The communication device 10 is embedded inside the tire 1 (tire main body 1M).

During manufacture of the tire 1, the raw tire constituting the tire main body 1M and the communication device 10 are accommodated inside a mold for forming a tire and are vulcanization-molded.

Hereinafter, preferred configurations of various tire structural members (such as the side-reinforcing rubber 2 and the bead filler 4b) constituting the tire main body 1M, and preferred positional relationships between the various tire structural members constituting the tire main body 1M and the communication device 10, will be described.

Note that the communication device 10 may be provided only in one of the pair of tire half portions on both sides of the tire equatorial plane CL in the tire 1. In that case, the configurations and positions described below are preferably satisfied in at least the tire half portion in which the communication device 10 is provided among the pair of tire half portions of the tire 1, but may also be satisfied in each of the pair of tire half portions of the tire 1.

Further, the communication device 10 may be provided in each of the pair of tire half portions of the tire 1. In that case, the configurations and positions described below are preferably satisfied in each of the tire half portions, but may also be satisfied only in one of the pair of tire half portions of the tire 1.

As illustrated in FIGS. 1 and 3, the side-reinforcing rubber 2 has a side-reinforcing rubber joint portion 2j at which a pair of tire circumferential end portions 2p1 and 2p2 of the side-reinforcing rubber 2 are joined to each other.

As schematically depicted in FIG. 3, one of the pair of tire circumferential end portions 2p1 and 2p2 of the side-reinforcing rubber 2 is a first tire circumferential end portion 2p1, which is the end portion on a first side CD1 in the tire circumferential direction of the side-reinforcing rubber 2. The first tire circumferential end portion 2p1 includes a first tire circumferential edge 2e1, which is the tire circumferential edge located furthest on the first side CD1 in the tire circumferential direction among the first tire circumferential end portion 2p1 and faces the first side CD1 in the tire circumferential direction. The other of the pair of tire circumferential end portions 2p1 and 2p2 of the side-reinforcing rubber 2 is a second tire circumferential end portion 2p2, which is the end portion on a second side CD2 in the tire circumferential direction of the side-reinforcing rubber 2. The second tire circumferential end portion 2p2 includes a second tire circumferential edge 2e2, which is the tire circumferential edge located furthest on the second side CD2 in the tire circumferential direction among the second tire circumferential end portion 2p2 and faces the second side CD2 in the tire circumferential direction.

As exemplified in FIG. 3, at the side-reinforcing rubber joint portion 2j, the pair of tire circumferential end portions 2p1 and 2p2 of the side-reinforcing rubber 2 may overlap each other in the tire width direction. In this case, the joining strength between the pair of tire circumferential end portions 2p1 and 2p2 of the side-reinforcing rubber 2 can be improved, and thus, the formation of a gap between the tire circumferential end portions 2p1 and 2p2 can be effectively suppressed. In this case, the first tire circumferential end portion 2p1 may be located on the outer side in the tire width direction relative to the second tire circumferential end portion 2p2, or the first tire circumferential end portion 2p1 may be located on the inner side in the tire width direction relative to the second tire circumferential end portion 2p2.

Alternatively, although not illustrated, at the side-reinforcing rubber joint portion 2j, the pair of tire circumferential end portions 2p1 and 2p2 of the side-reinforcing rubber 2 may be butted against (and thus, in contact with) each other at their respective tire circumferential edges 2e1 and 2e2. In this case, as in the example of FIG. 3, when viewing a cross section along the tire width direction and the tire circumferential direction (FIG. 3), the pair of tire circumferential edges 2e1 and 2e2 of the side-reinforcing rubber 2 may be substantially parallel to the tire width direction, or may extend in a direction inclined with respect to the tire width direction.

In each of the above examples, the pair of tire circumferential end portions 2p1 and 2p2 of the side-reinforcing rubber 2 may each have a substantially uniform (constant) thickness in the tire width direction along the tire circumferential direction, as in the example of FIG. 3, or may have a non-uniform thickness in the tire width direction along the tire circumferential direction. For example, the thickness in the tire width direction may gradually decrease toward each of the tire circumferential edges 2e1 and 2e2 along the tire circumferential direction.

In each of the above examples, the pair of tire circumferential edges 2e1 and 2e2 of the side-reinforcing rubber 2 may form a three-dimensional surface, as in the example of FIG. 3, and thus, when viewing a cross section along the tire width direction and the tire circumferential direction (FIG. 3), may form a line. Alternatively, the pair of tire circumferential edges 2e1 and 2e2 of the side-reinforcing rubber 2 may form a three-dimensional line, and thus, when viewing a cross section along the tire width direction and the tire circumferential direction (FIG. 3), may form a point.

In each of the above examples, in a projection plane (FIG. 1) obtained by projecting the tire 1 in the tire width direction, the pair of tire circumferential edges 2e1 and 2e2 of the side-reinforcing rubber 2 may each extend in a direction inclined with respect to the tire radial direction, as in the example of FIG. 1, or may extend parallel to the tire radial direction.

In each of the above examples, as in the example of FIG. 3, the thickness in the tire width direction at the side-reinforcing rubber joint portion 2j of the side-reinforcing rubber 2 may be greater than the thickness in the tire width direction at portions other than the side-reinforcing rubber joint portion 2j.

As exemplified in FIG. 1, in the tire 1, the entirety of the communication device 10 is located within a defined tire circumferential region Kr. The defined tire circumferential region Kr is located, in the tire circumferential direction, on the side opposite to the side-reinforcing rubber joint portion 2j. More specifically, the defined tire circumferential region Kr is a tire circumferential region that extends over a tire angle range of 90°, centered at a defined tire circumferential position Kb (the tire circumferential center of the defined tire circumferential region Kr). The defined tire circumferential position Kb is a tire circumferential position separated by 180°, with the central axis O of the tire 1 as the center of rotation, from the tire circumferential center 2jc of the side-reinforcing rubber joint portion 2j. The tire circumferential center 2jc of the side-reinforcing rubber joint portion 2j is a tire circumferential position located exactly midway in the tire circumferential direction between the end on the first side CD1 in the tire circumferential direction at the side-reinforcing rubber joint portion 2j (specifically, the end on the first side CD1 in the tire circumferential direction at the first tire circumferential edge 2e1) and the end on the second side CD2 in the tire circumferential direction (specifically, the end on the second side CD2 in the tire circumferential direction at the second tire circumferential edge 2e2).

As described above, in the present embodiment, the entirety of the communication device 10 is located within the defined tire circumferential region Kr. As a result, the communication device 10 is located, in the tire circumferential direction, substantially on the side opposite to the side-reinforcing rubber joint portion 2j, and thus, is positioned at a location distant from the side-reinforcing rubber joint portion 2j.

The rubber constituting the side-reinforcing rubber 2 generally tends to generate heat more readily than any other tire constituent member (particularly, tire constituent members made of rubber) constituting the tire main body 1M during rolling of the tire 1 (for example, during run-flat operation). In addition, the side-reinforcing rubber 2 is generally relatively thick among all tire constituent members (particularly, tire constituent members made of rubber) constituting the tire main body 1M, and especially at the side-reinforcing rubber joint portion 2j, tends to be even thicker, and thus, the amount of heat generation and heat accumulation tends to be particularly high.

In this respect, according to the present embodiment, since the communication device 10 is disposed at a location distant from the side-reinforcing rubber joint portion 2j, which is a portion particularly prone to heat generation and heat accumulation inside the tire 1 (specifically, the tire main body 1M) during rolling, it is possible to effectively suppress damage to the communication device 10 due to heat generated inside the tire 1 (specifically, the tire main body 1M) during rolling. As a result, the durability of the communication device 10, and thus the tire 1, can be improved.

From a similar perspective, as in the example of FIG. 1, it is preferable that, in the projection plane (FIG. 1) obtained by projecting the tire 1 in the tire width direction, the communication device 10 is located on the defined tire circumferential position Kb, and it is more preferable that the IC chip 10c of the communication device 10 is located on the defined tire circumferential position Kb.

As illustrated in FIGS. 1 and 3, the bead filler 4b has a bead filler joint portion 4bj at which a pair of tire circumferential end portions 4bp1 and 4bp2 of the bead filler 4b are joined to each other.

Although not illustrated, the configuration of the bead filler joint portion 4bj can be considered similar to the configuration of the side-reinforcing rubber joint portion 2j described above. That is, one of the pair of tire circumferential end portions 4bp1 and 4bp2 of the bead filler 4b is a first tire circumferential end portion 4bp1, which is the end portion on a first side CD1 in the tire circumferential direction of the bead filler 4b. The first tire circumferential end portion 4bp1 includes a first tire circumferential edge 4be1, which is the tire circumferential edge located furthest on the first side CD1 in the tire circumferential direction among the first tire circumferential end portion 4bp1 and faces the first side CD1 in the tire circumferential direction. The other of the pair of tire circumferential end portions 4bp1 and 4bp2 of the bead filler 4b is a second tire circumferential end portion 4bp2, which is the end portion on a second side CD2 in the tire circumferential direction of the bead filler 4b. The second tire circumferential end portion 4bp2 includes a second tire circumferential edge 4be2, which is the tire circumferential edge located furthest on the second side CD2 in the tire circumferential direction among the second tire circumferential end portion 4bp2 and faces the second side CD2 in the tire circumferential direction.

Similarly to FIG. 3, at the bead filler joint portion 4bj, the pair of tire circumferential end portions 4bp1 and 4bp2 of the bead filler 4b may overlap each other in the tire width direction. In this case, the joining strength between the pair of tire circumferential end portions 4bp1 and 4bp2 of the bead filler 4b can be improved, and thus, the formation of a gap between the tire circumferential end portions 4bp1 and 4bp2 can be effectively suppressed. In this case, the first tire circumferential end portion 4bp1 may be located on the outer side in the tire width direction relative to the second tire circumferential end portion 4bp2, or the first tire circumferential end portion 4bp1 may be located on the inner side in the tire width direction relative to the second tire circumferential end portion 4bp2.

Alternatively, at the bead filler joint portion 4bj, the pair of tire circumferential end portions 4bp1 and 4bp2 of the bead filler 4b may be butted against (and thus, in contact with) each other at their respective tire circumferential edges 4be1 and 4be2. In this case, when viewing a cross section along the tire width direction and the tire circumferential direction, the pair of tire circumferential edges 4be1 and 4be2 of the bead filler 4b may be substantially parallel to the tire width direction, or may extend in a direction inclined with respect to the tire width direction.

In each of the above examples, the pair of tire circumferential end portions 4bp1 and 4bp2 of the bead filler 4b may each have a substantially uniform (constant) thickness in the tire width direction along the tire circumferential direction, or may have a non-uniform thickness in the tire width direction along the tire circumferential direction. For example, the thickness in the tire width direction may gradually decrease toward each of the tire circumferential edges 4be1 and 4be2 along the tire circumferential direction.

In each of the above examples, the pair of tire circumferential edges 4be1 and 4be2 of the bead filler 4b may form a three-dimensional surface, and thus, when viewing a cross section along the tire width direction and the tire circumferential direction, may form a line. Alternatively, the pair of tire circumferential edges 4be1 and 4be2 of the bead filler 4b may form a three-dimensional line, and thus, when viewing a cross section along the tire width direction and the tire circumferential direction, may form a point.

In each of the above examples, in a projection plane (FIG. 1) obtained by projecting the tire 1 in the tire width direction, the pair of tire circumferential edges 4be1 and 4be2 of the bead filler 4b may each extend in a direction inclined with respect to the tire radial direction, as in the example of FIG. 1, or may extend parallel to the tire radial direction.

In each of the above examples, the thickness in the tire width direction at the bead filler joint portion 4bj of the bead filler 4b may be greater than the thickness in the tire width direction at portions other than the bead filler joint portion 4bj.

As exemplified in FIG. 1, in the projection plane (FIG. 1) obtained by projecting the tire 1 in the tire width direction, it is preferable that the entirety of the communication device 10 does not overlap the bead filler joint portion 4bj.

The bead filler 4b is generally relatively thick among all tire constituent members (particularly, tire constituent members made of rubber) constituting the tire main body 1M, and especially at the bead filler joint portion 4bj, tends to be even thicker, and thus, the amount of heat accumulation tends to be high.

Therefore, as in the present example, by ensuring that the communication device 10 does not overlap the bead filler joint portion 4bj in the above projection plane (FIG. 1), the communication device 10 can be disposed at a location distant from the bead filler joint portion 4bj, which is a portion particularly prone to heat accumulation inside the tire 1 (specifically, the tire main body 1M) during rolling, and thus, it is possible to effectively suppress damage to the communication device 10 due to heat generation and heat accumulation inside the tire 1 (specifically, the tire main body 1M) during rolling. As a result, the durability of the communication device 10, and thus the tire 1, can be improved.

However, in the above projection plane (FIG. 1), at least a part of the communication device 10 may overlap the bead filler joint portion 4bj.

From a similar perspective, as exemplified in FIG. 1, it is preferable that at least a part (preferably, the entirety) of the bead filler joint portion 4bj is located within a tire circumferential region outside the defined tire circumferential region Kr. As a result, the communication device 10 can be disposed at a location even further distant from the bead filler joint portion 4bj, which is a portion particularly prone to heat accumulation inside the tire 1 (specifically, the tire main body 1M) during rolling, and thus, it is possible to further effectively suppress damage to the communication device 10 due to heat generation and heat accumulation inside the tire 1 (specifically, the tire main body 1M) during rolling.

As exemplified in FIG. 1, the shorter tire circumferential distance from the tire circumferential center 10g of the communication device 10 to the tire circumferential center 4bjc of the bead filler joint portion 4bj may be shorter than the shorter tire circumferential distance from the tire circumferential center 10g of the communication device 10 to the tire circumferential center 2jc of the side-reinforcing rubber joint portion 2j.

Alternatively, the shorter tire circumferential distance from the tire circumferential center 10g of the communication device 10 to the tire circumferential center 4bjc of the bead filler joint portion 4bj may be substantially the same as the shorter tire circumferential distance from the tire circumferential center 10g of the communication device 10 to the tire circumferential center 2jc of the side-reinforcing rubber joint portion 2j.

Alternatively, the shorter tire circumferential distance from the tire circumferential center 10g of the communication device 10 to the tire circumferential center 4bjc of the bead filler joint portion 4bj may be longer than the shorter tire circumferential distance from the tire circumferential center 10g of the communication device 10 to the tire circumferential center 2jc of the side-reinforcing rubber joint portion 2j.

It should be noted that each of "the shorter tire circumferential distance from the tire circumferential center 10g of the communication device 10 to the tire circumferential center 4bjc of the bead filler joint portion 4bj" and "the shorter tire circumferential distance from the tire circumferential center 10g of the communication device 10 to the tire circumferential center 2jc of the side-reinforcing rubber joint portion 2j" refers to the shorter of the tire circumferential distances measured along the rotation direction toward the first side CD1 in the tire circumferential direction and the tire circumferential distances measured along the rotation direction toward the second side CD2 in the tire circumferential direction.

In the above projection plane (FIG. 1), the bead filler joint portion 4bj may, as in the example of FIG. 1, not overlap the side-reinforcing rubber joint portion 2j, or may overlap the side-reinforcing rubber joint portion 2j.

The orientation (direction) of the communication device 10 is arbitrary, but from the perspective of improving the followability to deformation of the tire during rolling and thus the durability of the communication device 10, it is preferable that, as in the example of FIG. 1, the longitudinal direction LD of the communication device 10 is oriented substantially along the tire circumferential direction. However, the communication device 10 may be oriented such that the short direction SD of the communication device 10 is substantially along the tire circumferential direction (in that case, the longitudinal direction LD of the communication device 10 will be substantially along the tire radial direction).

As in the example of FIG. 2, it is preferable that the communication device 10 is disposed on the outer side in the tire width direction relative to the side-reinforcing rubber 2.

It is preferable that the communication device 10 is disposed on the outer side in the tire width direction relative to the carcass 5, as in the example of FIG. 2.

It is preferable that the communication device 10 is located between the side rubber 8 and the carcass 5, as in the example of FIG. 2. Since the side rubber 8 is located at the outermost side of the tire, it has high heat dissipation performance. Therefore, by locating the communication device 10 between the side rubber 8 and the carcass 5, the amount of heat applied to the communication device 10 can be further reduced by the heat dissipation function of the side rubber 8, and thus, damage to the communication device 10 due to heat can be further suppressed.

In this case, as illustrated in FIG. 2, it is preferable that the communication device 10 is in contact with the side rubber 8.

As illustrated in FIG. 2, it is preferable that the communication device 10 is embedded inside the tire side portion 1d of the tire 1.

Generally, metal may attenuate radio waves between the communication device 10 and the above-mentioned external device (for example, a reader or a reader/writer), which may reduce the communication performance between the communication device 10 and the external device, and thus, the communication distance between the communication device 10 and the external device may become shorter. On the other hand, in the tire main body 1M, metal (for example, steel) may be used in the belt 6, bead core 4a, and the like. Generally, the tire side portion 1d tends to contain less metal than the tread portion 1a. Therefore, by disposing the communication device 10 in the tire side portion 1d, communication performance can be improved and the communication distance between the communication device 10 and the external device can be increased, as compared to the case where the communication device 10 is disposed in the tread portion 1a.

It is preferable that the communication device 10 is embedded in a portion of the tire side portion 1d of the tire main body 1M that is on the outer side in the tire width direction relative to the carcass 5.

Further, it is preferable that the communication device 10 is oriented such that the thickness direction TD of the communication device 10 is substantially along the tire width direction (FIG. 2).

As in the example of FIG. 2, it is preferable that the communication device 10 is disposed in the sidewall portion 1b. Generally, the sidewall portion 1b tends to contain less metal than the bead portion 1c. Therefore, by disposing the communication device 10 in the sidewall portion 1b, communication performance can be improved and the communication distance between the communication device 10 and the external device can be increased, as compared to the case where the communication device 10 is disposed in the bead portion 1c.

It is preferable that the communication device 10 is located, in the tire radial direction, in the vicinity of the tire maximum width position of the tire 1 (specifically, the tire main body 1M).

As illustrated in FIG. 2, the radially outer end 10u of the communication device 10 (more preferably, the entirety of the communication device 10) is preferably located radially outward of the radially outer end of the bead core 4a, and more preferably, is located radially outward of the radial center of the bead filler 4b; for example, it is preferably located radially outward of the radially outer end 4bu of the bead filler 4b.

This configuration is particularly preferable when the tire 1 is configured as a passenger vehicle pneumatic tire.

As described above, when the communication device 10 is disposed in the sidewall portion 1b, as in the example of FIG. 2, it is preferable that the radially outer end 10u of the communication device 10 is positioned radially inward of the radially outer end 5e of the ply turn-up portion 5T of the carcass 5.

This enables improved communication performance, allows the communication distance between the communication device 10 and the predetermined external device to be increased, and, since the communication device 10 can be disposed in a portion of the tire main body 1M that experiences relatively little strain during rolling of the tire 1 or the like, the durability of the communication device 10, and thus of the tire 1, can be improved.

The radial distance between the radially outer end 10u of the communication device 10 and the radially outer end 5e of the ply turn-up portion 5T of the carcass 5 is preferably 3 mm to 30 mm, and more preferably 5 mm to 15 mm.

This configuration is particularly preferable when the tire 1 is configured as a passenger vehicle pneumatic tire.

As in the example of FIG. 2, it is preferable that the radially outer end 5e of the ply turn-up portion 5T of the carcass 5 is positioned radially outward of the radially outer end 4bu of the bead filler 4b.

However, the radially outer end 5e of the ply turn-up portion 5T of the carcass 5 may be located at the same radial position as the radially outer end of the bead filler 4b, or may be located radially inward thereof.

The radially outer end 5e of the ply turn-up portion 5T of the carcass 5 may be located radially outward of the tire maximum width position of the tire 1 (specifically, the tire main body 1M), may be located at the same radial position as the tire maximum width position, or may be located radially inward of the tire maximum width position.

Here, the "tire maximum width position" refers to the radial position of the tire 1 (specifically, the tire main body 1M) at which the dimension in the tire width direction is maximized.

As in the example of FIG. 2, it is preferable that the communication device 10 is in contact with the outer surface in the tire width direction of the carcass 5, and more preferably, is in contact with the outer surface in the tire width direction of the ply turn-up portion 5T of the carcass 5.

This configuration is particularly preferable when the tire 1 is configured as a passenger vehicle pneumatic tire.

### INDUSTRIAL APPLICABILITY

The tire according to the present disclosure can be suitably used for any type of pneumatic tire, and, for example, can be suitably used for a passenger vehicle pneumatic tire.

### REFERENCE SIGNS LIST

1: tire
1M: tire main body, 1a: tread portion, 1b: sidewall portion, 1c: bead portion, 1d: tire side portion,
2: side-reinforcing rubber, 2p1: first tire circumferential end (tire circumferential end), 2p2: second tire circumferential end (tire circumferential end), 2e1: first tire circumferential edge (tire circumferential edge), 2e2: second tire circumferential edge (tire circumferential edge), 2j: side-reinforcing rubber joint portion, 2jc: tire circumferential center of side-reinforcing rubber joint portion,
4a: bead core,
4b: bead filler, 4bp1: first tire circumferential end (tire circumferential end), 4bp4b: second tire circumferential end (tire circumferential end), 4be1: first tire circumferential edge (tire circumferential edge), 4be2: second tire circumferential edge (tire circumferential edge), 4bj: bead filler joint portion, 4bjc: tire circumferential center of bead filler joint portion, 4bu: radially outer end of bead filler,
5: carcass, 5a: carcass ply, 5c: carcass cord (cord), 5r: coating rubber, 5M: ply main body, 5T: ply turn-up portion, 5e: radially outer end of ply turn-up portion of carcass,
6: belt, 6a: belt layer,
7: tread rubber,
8: side rubber,
9: inner liner,
10: communication device,
10e: RF tag,
10b: antenna portion, 10b1, 10b2: antenna,
10f: covering portion, 10f1, 10f2: covering member,
10c: IC chip,
10u: radially outer end of communication device,
10g: tire circumferential center of communication device,
CL: tire equatorial plane,
WD: tire width direction, RD: tire radial direction, CD: tire circumferential direction, CD1: first side in tire circumferential direction, CD2: second side in tire circumferential direction,
LD: longitudinal direction of communication device, SD: short direction of communication device, TD: thickness direction of communication device,
Kb: defined tire circumferential position, Kr: defined tire circumferential region,
O: central axis of tire (rotation axis)

## Claims

1. A tire comprising: side-reinforcing rubber having a crescent-shaped cross section, which is disposed in a sidewall portion of the tire; and
a communication device embedded inside the tire,
wherein the side-reinforcing rubber has a side-reinforcing rubber joint portion at which tire circumferential end portions of the side-reinforcing rubber are joined to each other, and
wherein the entirety of the communication device is located within a defined tire circumferential region that extends over a tire angle range of 90°, centered at a defined tire circumferential position separated by 180° from a tire circumferential center of the side-reinforcing rubber joint portion.

2. The tire according to claim 1, further comprising a bead filler, wherein the bead filler has a bead filler joint portion at which tire circumferential end portions of the bead filler are joined to each other, and
wherein, in a projection plane obtained by projecting the tire in a tire width direction, the communication device does not overlap the bead filler joint portion.

3. The tire according to claim 2, wherein the bead filler joint portion is located outside the defined tire circumferential region.

4. The tire according to claim 2, wherein a shortest tire circumferential distance from a tire circumferential center of the communication device to a tire circumferential center of the bead filler joint portion is shorter than a shortest tire circumferential distance from the tire circumferential center of the communication device to a tire circumferential center of the side-reinforcing rubber joint portion.

5. The tire according to any one of claims 1 to 4, wherein the communication device includes an RF tag.
